# EUROPÄISCHE PATENTSCHRIFT

(11) **EP 0 729 303 B1**
(45) Veröffentlichungstag und Bekanntmachung des Hinweises auf die Patenterteilung: **21.05.1997**
(21) Anmeldenummer: 95901402.8
(22) Anmeldetag: 19.11.1994
(51) Int. Cl.: A21C 1/06, A21C 1/14

(54) **KNETVORRICHTUNG**
KNEADING MACHINE
MACHINE A PETRIR

(30) Priorität: 20.11.1993 DE 4339628
(43) Veröffentlichungstag der Anmeldung: 04.09.1996
(73) Patentinhaber: ISMAR MASCHINEN GMBH, 50668 Köln (DE)
(72) Erfinder: ISMAR, Thomas Theodor, 50668 Köln (DE)
(74) Vertreter: Cohausz & Florack
(86) Internationale Anmeldenummer: EP9403841
(87) Internationale Veröffentlichungsnummer: WO9514386

(56) Entgegenhaltungen:
- EP-A- 0 144 092
- EP-A- 0 213 232
- US-A- 4 883 361

## Beschreibung

Die vorliegende Erfindung stellt einen kontinuierlichen Kneter für Brotteige, insbesondere für Weizenteige dar.

Ein Kneter gemäß Oberbegriff des Anspruchs 1 ist aus US-A-4883361 bekannt.

Die Vorrichtung setzt sich zusammen aus einem nach oben offenen länglichen Behälter 1 in Form eines Troges und zwei synchron angetriebenen Wellen 2a,2b, die gegenläufig rotieren. Innerhalb des Troges 1 befindet sich bis zur Füllstandslinie 3 eingefülltes vorgemischtes Teigmaterial.

Die beiliegenden Figuren der Zeichnung zeigen:
- Fig. 1: einen Querschnitt durch den Trog
- Fig. 2: eine Draufsicht auf den Trog
- Fig. 3: eine perspektivische Ansicht in Längsrichtung
und
- Fig. 4: Ansichten der Knetelemente in unterschiedlichen Winkelpositionen.

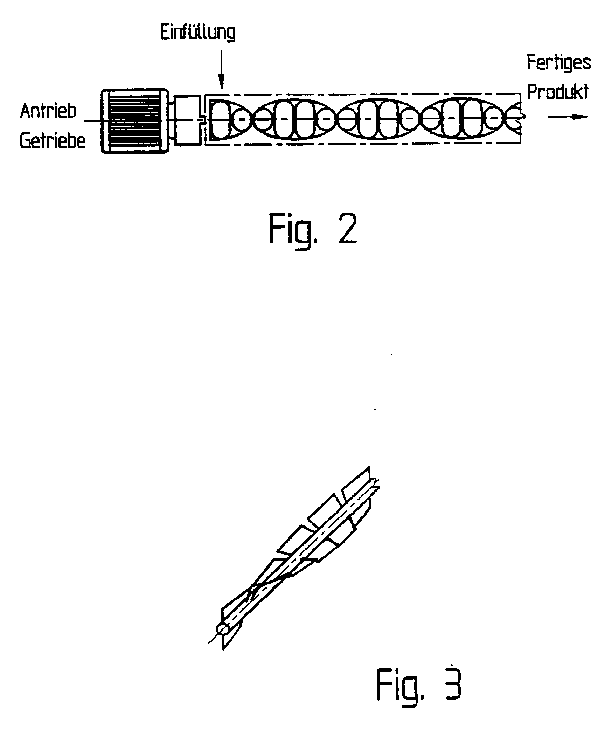

Wie in den Figuren 2 und 3 dargestellt, weist jede der synchronen Wellen 2a,2b Knetelemente auf, von denen jedes einzelne die Form eines U-förmigen Bügels hat, deren beide Schenkel an der Welle befestigt sind, wobei die Basisseite des U-förmigen Knetelementes nach außen zeigt.

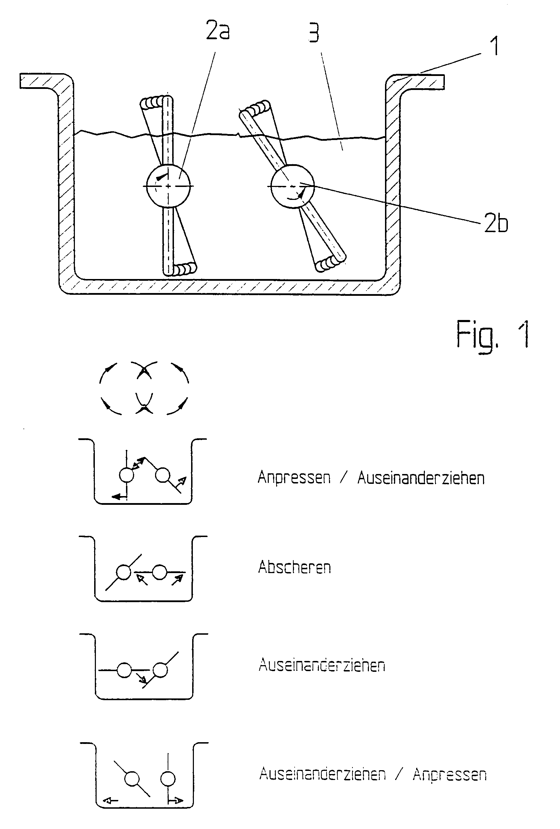

Es sind jeweils je Welle zwei sich diametral gegenüberliegende Knetelemente vorgesehen. In Längsrichtung der Wellen 2a,2b grenzen die einzelnen Kneterelemente nahezu lückenlos aneinander an und bilden eine Schraubenlinie, wie sie in den Figuren 2 und 3 skizziert ist. Dies erfolgt dadurch, daß in Längsrichtung jeweils das nachfolgende Kneterelement um einen bestimmten Winkel, z.B. 22,5° gegenüber dem vorhergehenden umfänglich versetzt angeordnet ist. Darüber hinaus ist jedes einzelne Kneterelement, wie insbesondere aus Figur 1 hervorgeht, geringfügig in Förderrichtung geneigt.

Die Kneterelemente der einen Kneterwelle 2a sind um 45° gegenüber der zweiten Kneterwelle 2b versetzt (Figur 1).

Die räumliche Anordnung der Kneterelemente ist aus der Draufsicht gemäß Figur 2 zu erkennen.

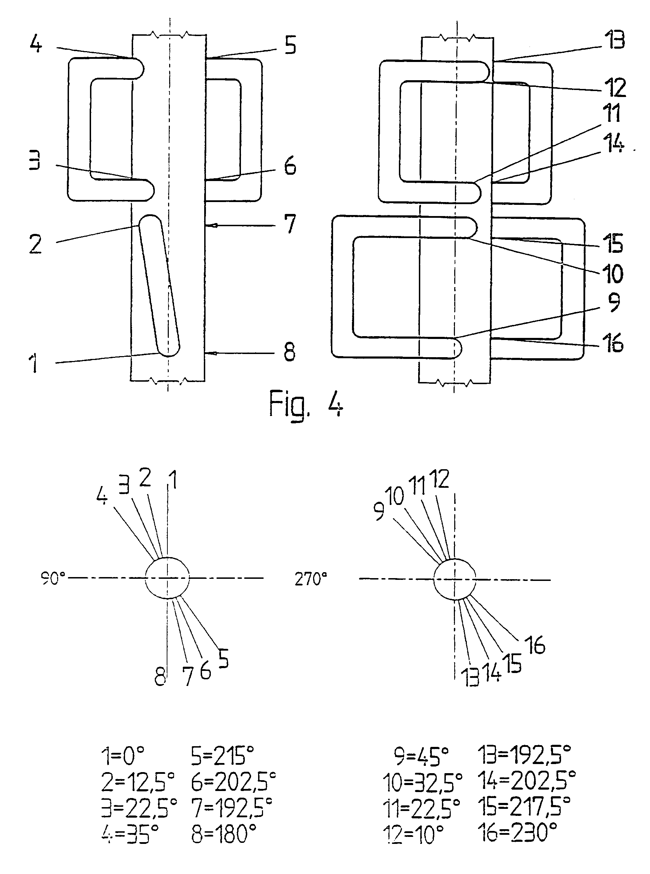

Fig. 4 zeigt die Ansichten der Kneterelemente in den jeweiligen mit ihren Winkelwerten bezeichneten räumlichen Positionen, wobei die in der linken Hälfte dargestellte Kneterwelle um 180° gegenüber der rechts dargestelllten Kneterwelle versetzt ist.

Die Vorrichtung arbeitet wie folgt:

Durch den synchronen gegenläufigen Antrieb der Kneterwellen 2a,2b, die mit ihrer Mittelachse unterhalb des Füllstandes innerhalb des Troges angeordnet sind, ergibt sich ein besonderer Kneteffekt, der insbesondere für Weizenteige ein sehr wirksames aber dennoch schonendes Kneten ermöglicht, und zwar in der Art des bislang im Bäckereigewerbe üblichen "händischen" Knetens. Gleichzeitig wird in Ergänzung des Knetvorganges das Produkt von der Einlaufstelle (Figur 3) zur Auslaufstelle aus dem Kneter gefördert.

Die Funktion wird anhand von Figur 1 insbesondere unter Bezug auf die im unteren Bereich der Figur dargestellten Skizze erläutert:

Beim Umlauf der rechten Kneterwelle 2b bleibt Teig auf der Oberseite der Kneterelemente hängen und wird über die Füllstandshöhe 3 hinaus ausgetragen. Sobald das in Figur 1 als unteres Element der rechten Kneterwelle 2b dargestellte Kneterelement 270° weitergedreht worden ist, gerät die auf ihm liegende Masse in den Einfluß des zugehörigen Kneterelements der Kneterwelle 2a. Dabei wird zunächst eine Teigmenge durch die äußere Kante des Kneterelementes der Kneterwelle 2a abgeschert und anschließend aufgrund der auseinanderlaufenden Bewegung der am beschriebenen Vorgang beteiligten Kneterelemente auseinandergezogen, wie dies ebenso auch beim händischen Kneten erfolgt.

Aufgrund dieses "Zieheffektes" verbunden mit dem vorherigen "Abscheren" bzw. "Anpressen" ergibt sich insbesondere bei Weizenteigen eine hervorragende Knetwirkung.

## Patentansprüche

1. Kontinuierlicher Kneter für Brotteige, insbesondere für Weizenteige, mit einem trogförmigen Behälter (1), der mindestens zwei paarweise synchron gegenläufig rotierende identischen Kneterwellen (2a,2b) mit an ihnen befestigten, in Längsrichtung benachbarten U-förmigen Bügelelemente aufweist, die schrittweise umfänglich gegeneinander versetzt angeordnet sind,
**dadurch gekennzeichnet**, daß die einzelnen Kneterelemente derart in Förderrichtung geneigt sind, daß die Bügelelemente eine sich entlang der Kneterwelle erstreckende Schraubenlinie bilden und daß der trogförmige Behälter (1) oben offen ist.

2. Kontinuierlicher Kneter nach Anspruch 1,
**dadurch gekennzeichnet**, daß der umfängliche Versatzwinkel des Bügelelementes 22,5° beträgt.

3. Kontinuierlicher Kneter nach Anspruch 1 oder 2,
**dadurch gekennzeichnet**, daß die derselben Längsposition entsprechenden Bügelelemente der beiden Kneterwellen 45° zueinander verdreht sind.

## Claims

1. A continuous kneading machine for doughs, especially for wheat doughs, with a tub-shaped container (1) which comprises at least two identical kneading shafts (2a, 2b) which counterrotate synchronously in pairs and comprise longitudinally adjacent U-shaped bracket components which are attached thereto and are offset relative to each other around the shaft circumference, characterized in that the individual kneading elements are inclined in the direction of motion in such a way that the bracket components form a helical profile along the kneading shaft and that the tub-shaped container (1) is open at the top.

2. A continuous kneading machine as claimed in claim 1, characterized in that the angle of offset of the bracket component around the shaft circumference is 22.5°.

3. A continuous kneading machine as claimed in claim 1 or 2, characterized in that the bracket components of the two kneading shafts which correspond to the same longitudinal position are rotationally offset towards one another by 45°.

## Revendications

1. Pétrin continu pour pâtes à pain, notamment les pâtes au froment, avec une cuve (1) en forme d'auge pourvue d'au moins deux broches à pétrin (2a,2b) identiques tournant par paire de façon synchronisée et dans des sens inverses et sur lesquelles sont fixés des étriers en forme de U, adjacents dans le sens longitudinal et disposés sur la circonférence de manière décalée et progressive, caractérisé en ce que chaque élément de pétrin est incliné dans le sens d'acheminement de manière à ce que les étriers forment une hélice s'étirant le long de la broche à pétrin et en ce que la partie supérieure de la cuve en forme d'auge (1) est ouverte.

2. Pétrin continu selon la revendication 1 caractérisé en ce que l'angle de déport circonférentiel des étriers est de 22,5°.

3. Pétrin continu selon la revendication 1 ou 2 caractérisé en ce que les étriers des deux broches à pétrin correspondant à la même position longitudinale sont tordus de 45° l'un vers l'autre.
